# EUROPÄISCHE PATENTSCHRIFT

(11) **EP 1 329 053 B1**
(45) Veröffentlichungstag und Bekanntmachung des Hinweises auf die Patenterteilung: **02.06.2004**
(21) Anmeldenummer: 01978190.5
(22) Anmeldetag: 28.09.2001
(51) Int. Cl.: H04L 12/10, H04L 12/28, G06F 1/32

(54) **VERFAHREN ZUM BETRIEB EINES KOMMUNIKATIONSNETZES IN EINEM STROMSPARMODUS**
METHOD FOR OPERATING A COMMUNICATIONS NETWORK IN A POWER-SAVING MODE
PROCEDE POUR ACTIONNER UN RESEAU DE COMMUNICATION DANS UN MODE ECONOMISEUR D'ENERGIE

(30) Priorität: 13.10.2000 DE 10050912
(43) Veröffentlichungstag der Anmeldung: 23.07.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 01705 Freital (DE)
(86) Internationale Anmeldenummer: PCT/DE2001/003738
(87) Internationale Veröffentlichungsnummer: WO 2002/032048

(56) Entgegenhaltungen:
- US-A- 5 652 893
- US-A- 5 784 628
- US-A- 5 787 298

## Beschreibung

### Stand der Technik

Die Erfindung geht aus von einem Verfahren zum Betrieb eines Kommunikationsneztes in einem Stromsparmodus.

Aus dem IEEE Standard 1394[1] ist ein serielles Bussystem bekannt, bei dem verschiedene Endgeräte (Knoten) entweder über ein 4-6-adriges Kabel oder einen Lichtwellenleiter angeschlossen werden. Mindestens ein Knoten kann dabei in der Art ausgeführt sein, dass er zusätzliche Verwaltungsfunktionen für das Netzwerk übernehmen kann (Busmanagement).

Neben obigem Standard gibt es eine busunabhängige Erweiterung, die unter dem Namen HAVi (Home Audio Video interoperability)[2] spezifiziert ist. Diese HAVi-Spezifikation beschreibt insbesondere die Fern-Kontrolle von Geräten unter Verwendung eines Ressourcen-Managers, der eine Ressource (Gerät) auf Anforderung belegt und sie auch wieder freigibt.

In der HAVi-Spezifikation wir ein verteiltes Modell beschrieben, bei dem die Steuerung der Geräte über Kontrollmodule, sogenannte "Device Control Modules (DCM)", vorgenommen wird. Diese DCM laufen als Softwareelement auf dem Gerät, das Kontrollfunktionen auf einem anderen Gerät ausführen will. Dabei ist ein DCM jeweils spezifisch für ein bestimmtes Gerät oder eine Geräteklasse.

In US 5784628 wird ein Computersystem veröffertlicht, in dem alle Geräte abgefragt werden, ob sie akzektieren, daß der Computer ausgeschaltet wird.

### Vorteile der Erfindung

Mit den Maßnahmen des Anspruchs 1 wird eine effektive netzwerkweite Koordination der Stromsparzustände erreicht. Dadurch ist es möglich, dieses Verfahren in einem Fahrzeug einzusetzen, bei dem geringer Stromverbrauch im Ruhezustand eine entscheidende Anforderung ist.

In den Unteransprüchen sind vorteilhafte Ausgestaltungen dieses Verfahrens angegeben.

### Zeichnungen

Anhand der Zeichnungen werden Ausführungsbeispiele der Erfindung erläutert. Es zeigen
Figur 1 eine Netztopologie eines Bussystems und
Figur 2 ein Funktionsdiagramm für die Steuerung des Stromsparmodus.

### Beschreibung von Ausführungsbeispielen

Die Erfindung wird anhand des seriellen Bussystems gemäss dem IEEE Standard 1394 [1] erläutert, wobei auch auf die Erweiterung gemäss HAVi-Spezifikation [2] Bezug genommen wird. Vor der eigentlichen Erläuterung der Erfindung wird zum besseren Verständnis auf den IEEE Standard 1394 und die HAVi-Spezifikation eingegangen. Außerdem werden einige Begriffe zum Verständnis erläutert.

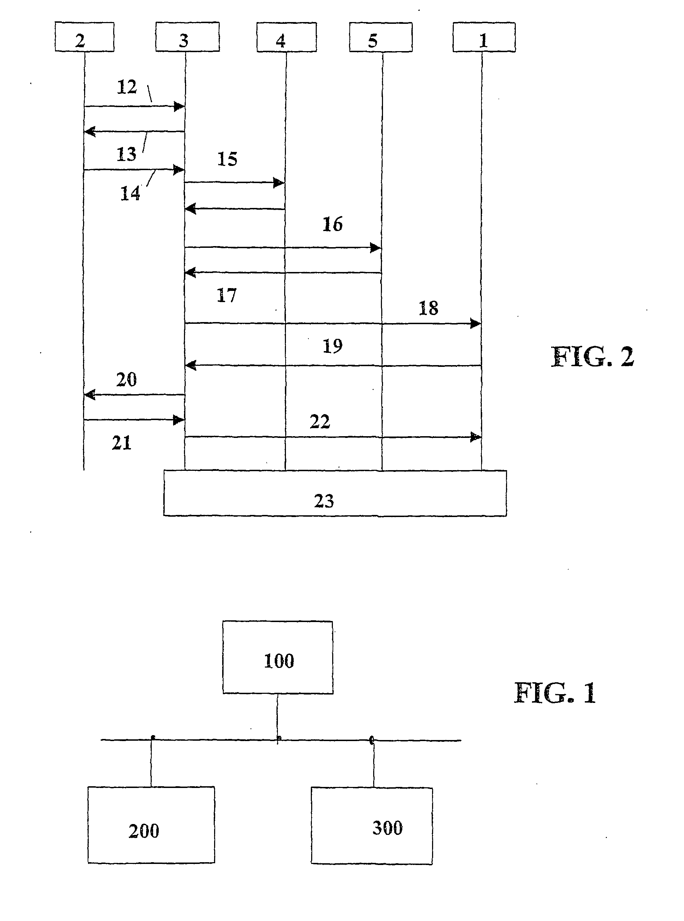

Die verschiedenen Endgeräte (Knoten) sind nach Figur 1 entweder über ein 4-6-adriges Kabel oder einen Lichtwellenleiter angeschlossen. Dabei kann ein Knoten wahlweise als Endstück (Blatt) 100 oder als Relaisknoten (Zweig) 200, 300 ausgeführt sein. Der oberste Knoten wird als Wurzel bezeichnet. Durch den Einsatz der verschiedenen Knotentypen kann eine geeignete Topologie des Netzes aufgebaut werden. Ein Blatt empfängt dabei Informationspakete und verarbeitet sie, falls die ZielAdresse des Paketes mit der eigenen übereinstimmt. Ein Zweig muss zusätzlich alle Pakete, die er auf einem Port empfängt auf allen anderen Ports aussenden.

IEEE 1394 sieht vor, dass das Netzwerk selbstkonfigurierend ist, d. h. nach dem Einschalten oder nach einem Reset senden alle Knoten einige ausgewählte Informationen über sich selbst ins Netz. Diese Information wird dabei von allen Knoten empfangen. Ein Knoten kann dabei in der Art ausgeführt sein, dass er zusätzliche Verwaltungsfunktionen für das Netzwerk übernehmen kann (Busmanagement). Dazu sammelt er alle Informationen der anderen Knoten, verarbeitet sie und speichert sie intern geeignet ab. Sollten mehrere Knoten Busmanagementfähigkeiten besitzen, gibt es ein Konkurrenzverfahren, aus dem ein Knoten als Sieger hervorgeht, der dann das Busmanagement übernimmt.

Neben den Verfahren, wie sie in den Spezifikationen zu IEEE 1394 beschrieben sind, gibt es die busunabhängige Erweiterung HAVi, die für den Einsatz in einem IEEE 1394-Netzwerk geeignet ist. Insbesondere die Fern-Kontrolle von Geräten von jedem anderen Punkt im Netzwerk wird in der HAVi-Spezifikation beschrieben. Dazu ist ein verteiltes Modell beschrieben, bei dem die Steuerung der Geräte über Kontrollmodule, sogenannte "Device Control Modules (DCM)", vorgenommen wird. Diese DCM laufen als Softwareelement auf dem Gerät, das Kontrollfunktionen auf einem anderen Gerät ausführen will. Dabei ist ein DCM jeweils spezifisch für ein bestimmtes Gerät oder eine Geräteklasse. Eine weitere Gruppe von Softwareelementen stellen die "Functional Component Modules" dar, von denen jeweils mehrere hierarchisch unterhalb eines DCM angeordnet werden können und die für die Kontrolle jeweils eines spezifischen funktionalen Teils eines Gerätes zuständig sind.

Die HaVi-Komponenten, die in Zusammenhang mit der Erfindung benutzt werden, sind nachfolgend erläutert:
HAVi basiert auf einem modularen Konzept für ein verteiltes System. Die einzelnen Module stellen dabei Netzelemente, insbesondere Softwareelemente dar. Alle Netzelemente im System werden einheitlich adressiert. Netzelemente können in den meisten Fällen sowohl zentral, als auch verteilt angeordnet sein. D.h. eine Implementierung mit nur einer Instanz eines bestimmten Softwareelementes, z.B. Stream Manager, bis hin zu einer Implementierung, die in jedem Gerät eine solche Instanz vorsieht ist möglich.

### Dabei sind folgende Netzelemente im System vorhanden:

Stream Manager: Der Stream Manager SM dient dem Auf- und Abbau und der Verwaltung von Verbindungen zwischen Softwareelementen und/oder Geräten. Der Stream Manager kann wie die Registry als verteiltes System aufgebaut sein. Dabei dienen spezielle Befehle dazu den Zustand aller SM oder eines bestimmten SM zu erhalten.

Event Manager: Der Event Manager transportiert Mitteilungen über Zustandsänderungen im System zu den Kommunikationsteilnehmern.

Registry: Die Registry beinhaltet Informationen über jedes im Netzwerk verfügbare Softwareelement und jedes verfügbare Gerät. Informationen über die einzelnen Softwareelemente werden dabei in Attributen abgelegt. Zusätzlich zu den vordefinierten Attributen ist es möglich, weitere hinzuzufügen. Die Architektur der Registry ist ein verteiltes System, d.h. jedes Gerät kann einen Teil der gesamten Registry beinhalten, sie kann aber auch zentral gehalten werden. Für den Zugriff auf die Registry ist dies unsichtbar, da die verschieden Instanzen der Registry innerhalb des Netzwerkes ggfs. die angeforderten Information selbsttätig austauschen.

Resource Manager: Der Resource Manager führt die Belegung und Freigabe von Ressourcen (Geräte, Softwareelemente) durch und speichert geplante Vorgänge (z.B. Videorekorderaufnahmen).

DCM Manager: Der DCM Manager ist verantwortlich für das Installieren und Deinstallieren von DCMs bei entsprechend geeigneten Geräten.

Device Control Module: Ein Device Control Module DCM ist ein Softwareelement, das ein oder mehrere FCMs zu einem Gerätetreiber zusammenführt.

Functional Control Module: Ein Functional Control Module FCM ist ein Softwareelement mit dem eine funktionale Einheit eines Gerätes (z.B. ein CD-Laufwerk oder ein UKW-Tuner) angesteuert wird. Ein DCM wird dabei aus den allen DCMs gemeinsamen Grundfunktionen und gerätespezifischen FCMs gebildet.

Diese, oder die jeweils in einem Gerät benötigten Module bilden eine einheitliche Applikationsschnittstelle. Durch diese einheitliche Schnittstelle wird eine Interoperabilität zwischen Applikationen und Geräten verschiedener Hersteller erreicht (Interoperability API).

Das erfindungsgemäße Verfahren kann bei einem System auf der Basis des HaVi-Standards [3] eingesetzt werden. Den dort beschriebenen Netzelementen wird ein Power Manager Element im Folgenden als lokale Stromsparmodus-Steuereinheit 3 bezeichnet, hinzugefügt, das für die lokale Verwaltung der Power(Stromspar)-Modi verantwortlich ist. Eine der im gesamten Netz vorhandenen Instanzen des Power Managers wird bei der Initialisierung des Systems zum Power Master als Zentraleinheit 2 bestimmt und ist damit für die netzwerkweite Koordination der Stromsparzustände der Netzelemente verantwortlich. Die Zentraleinheit 2 entscheidet aufgrund verschiedener Information (z.B. Busaktivität, Batteriestatus, Zündung ein/aus) über die Änderung des Stromspar-Modus eines oder mehrerer bzw. aller Geräte im Netz. Hat der Fahrer sein Kraftfahrzeug verlassen, ist die Zündung aus und die Busaktivität ist nahezu Null. Diese Kriterien wertet die Zentraleinheit dazu in den Stromspar-Modus zu wechseln. Dazu sendet die Zentraleinheit 2 entsprechende Kommandos an ausgewählte (unicast, multicast) oder alle (broadcast) Geräte/Netzelemente im Netzwerk. Bei einer intern getroffenen Entscheidung der Zentraleinheit 2, alle Geräte in den Stromsparzustand zu versetzen, wird sie im normalen Betrieb zunächst eine Ankündigung über den anstehenden Zustandswechsel im Netz versenden. Beim Empfang dieser Ankündigung überprüfen die lokalen Stromsparmodus-Steuereinheiten 3, ob der Wechsel durchgeführt werden kann, oder ob noch Aktivität (Nutzer oder Ressourcen) im Gerät vorhanden ist. Wenn ein Gerät mit dem Zustandswechsel einverstanden ist, bestätigt die Stromsparmodus-Steuereinheit 3 dieses Gerätes die Ankündigung positiv, andernfalls negativ. Nach einer positiven Bestätigung ist es besonders vorteilhaft, wenn das Gerät keine Neuaufnahme von Aktivitäten mehr zulässt, um den weiteren Verlauf nicht zu stören. Bei einer negativen Bestätigung kann das Gerät in der Antwort zusätzlich übermitteln, welche Teile innerhalb des Gerätes (Softwareelemente) noch Aktivität haben. Dadurch ist u.U. eine Detektion defekter oder sich falsch verhaltender Geräte möglich.

Nach einer positiven Bestätigung von allen Geräten im Netz, sendet die Zentraleinheit 2 eine Aufforderung in den Stromsparzustand zu wechseln. Auch diesen Aufruf kann eine Stromsparmodus-Steuereinheit 3 in einem Gerät noch zurückweisen und dadurch den Zustandswechsel unterbrechen. Andernfalls wechseln die Geräte den Zustand, wie angewiesen.

Zusätzlich zu diesem kooperativen Verfahren gibt es für Ausnahmefälle ein unkooperatives Verfahren, bei dem die Zentraleinheit 2 ein ,Force'-Kommando, d.h. einen zwangsweisen Zustandswechsel, insbesondere durch eine besondere Kennzeichnung einer Ankündigung, versendet. Bei Empfang dieses Kommandos hat ein Gerät keine Möglichkeit der Ablehnung, sondern sollte den Zustandswechsel vollziehen, zumindest nach einer vereinbarten Zeit.

Anhand der Figur 2 wird nachfolgend ein konkretes Ausführungsbeispiel erläutert. Eines der im System befindlichen Geräte wurde bei der Initialisierung des Systems als Zentraleinheit 2 (Power Master) ausgewählt.

Zur Ausführung des beschriebenen Verfahrens werden folgende Funktionsaufrufe verwendet:
Status GetPowerMode (OUT PowerMode) (12)
Status SetPowerMode (
IN PowerMode newPowerMode,
IN RequestMode mode,
OUT sequence<SEID> seidList)
Status ChangePowerMode (
IN RequestMode mode,
IN boolean application,
OUT boolean confirmed,
OUT wstring<50> info)

Der Power Master (Zentraleinheit 2) entscheidet aufgrund ihm vorliegender Information (z.B. Busauslastung, Stellung des Zündschlüssels, Stellung der Zentralverriegelung, Innenraumsensorik), dass eines oder mehrere (ggf. auch alle) Geräte im System nicht mehr benötigt werden und in den Stromsparmodus versetzt werden sollen. Zu diesem Zweck fragt er bei den lokalen Power Managern (Stromsparmodus-Steuereinheiten 3) im System mit GetPowerState 12, 13 an, in welchem Modus sich die Netzelemente/Geräte 1 befinden.

Den lokalen Stromsparmodus-Steuereinheiten 3 der Geräte, die ihren Power-Mode wechseln sollen, kündigt der Power Master 2 mit SetPowerMode (mode = ANNOUNCE) 14 den bevorstehenden Wechsel an. Die lokalen Power Manager 3 überprüfen mit Hilfe ihres Stream Managers 4 (GetLocalConnectionMap 15) und ihrer Registry (GetElement 16, 17), ob und welche Ressourcen in ihren Geräten belegt sind.

Den Software(Netz)-Elementen 1, die noch Ressourcen belegen, wird mit ChangePowerMode (mode = ANNOUNCE 18) der bevorstehende Wechsel des Power-Modes angekündigt. In ihrer Antwort (19) können die Software-Elemente mitteilen, ob der Wechsel aus ihrer Sicht möglich ist oder nicht. Nach der kooperativen Methode wird im Falle einer negativen Antwort mindestens eines dieser Software-Elemente über den ihm zugeordneten lokalen Power Manager 3 die Anfrage des Power Masters 2 abweisen. In diesem Fall wird der Vorgang abgebrochen.

Wenn der Power Master 2 eine positive Antwort auf die Ankündigung erhält (20), wiederholt er die Nachricht SetPowerMode mit mode = SET 21. Daraufhin wechseln die angesprochenen Geräte über eine Mitteilung 22 von ihrem Power Manager 3 in den gewählten Power-Mode 23.

Nachfolgend ein Beispiel für einen nicht kooperativen Wechsel in den Stromsparzustand:
Der Power Master 2 erhält die Information, dass der Zustand einer Versorgungsquelle, insbesondere der Ladezustand der Batterie, kritisch ist und entscheidet, dass alle Geräte im System unverzüglich in einen Stromsparmodus wechseln. Um eine Verzögerung des Vorgangs durch Abweisen der Ankündigung wie dem zuvor aufgeführten Beispiel möglichst zu vermeiden, setzt der Power Master 2 in der Nachricht SetPowerMode den Parameter mode auf FORCE. Die lokalen Power Manager 3 setzen ihrerseits in ChangePowerMode mode=FORCE. Damit wissen alle Software-Elemente, dass das System nun heruntergefahren wird. Im FORCE-Modus können die Software-Elemente die Ankündigung nicht abweisen sondern müssen unverzüglich herunterfahren.

Es kann auch vereinbart werden, dass bei Ausbleiben einer Bestätigung der Ankündigung durch den Power Master 2 oder bei Empfang einer besonders gekennzeichneten Ankündigung (FORCE) der Wechsel in den Stromspar-Modus nach einer vorgegebenen Zeit durch den Power Master 2 oder den lokalen Power Manager 3 automatisch vorgenommen wird.

Besonders vorteilhaft ist es, wenn der Power Master auch die Funktionen des Isochronous Resource Managers und des Cycle Masters auf dem IEEE1394-Bus übernimmt.

Alternativ kann ein Power Manager 3 auch auf Aufrufe mit ,SET' und ,FORCE` positive Quittungen senden. Dadurch kann der Power Master 2 überprüfen, ob alle Geräte erreicht wurden und ggf. das entsprechende Kommando wiederholen.

Literatur
[1] IEEE, "P1394a Draft Standard for a High Performance Serial Bus (Supplement)", 09/1999
[2] IEEE, "P1394b Draft Standard for a High Performance Serial Bus (Supplement)", 02/2000
[3] HAVi Organization, "The HAVi Specification 1.0", 01/2000
[4] MOST-Cooperation, "MOST Specification Rev 2.0", 12/1999

## Patentansprüche

1. Verfahren zum Betrieb eines Kommunikationsnetzes in einem Stromsparmodus mit folgenden Schritten:
- für die netzwerkweite Koordination der Stromsparzustände von Netzelementen ist eine Zentraleinheit (2) vorgesehen, die aufgrund von Aktivitäten und/oder Zuständen bei Geräten im Netz entscheidet, ob eines oder mehrere der Netzelemente beziehungsweise das/die diesem/diesen zugeordneten Gerät/e in den Stromsparmodus versetzt werden kann/können,
- der der aufgrund dieser Entscheidung bevorstehende Wechsel in den Stromsparmodus wird den Netzelementen/Geräten angekündigt (14),
- eine lokale Stromsparmodus-Steuereinheit (3) prüft (15,16,17) bei Empfang einer Ankündigung (14) durch die Zentraleinheit (2) zum Wechsel in den Stromsparmodus, ob der Wechsel durchgeführt werden kann oder ob noch Aktivitäten in Geräten bestehen, die einen Wechsel in den Stromsparmodus zumindest für eine vorgegebene Zeit verhindern sollen,
- die lokale Stromsparmodus-Steuereinheit (3) bestätigt (20) die Ankündigung zum Wechsel in den Stromsparmodus positiv, wenn das ihr zugeordnete Netzelement/Gerät mit dem Zustandswechsel einverstanden ist, andernfalls negativ,
dadurch gehennzeichnet, daß
- bei einer negativen Bestätigung übermittelt das Netzelement/Gerät in der Antwort zusätzlich, welche Teile innerhalb des Netzelementes/Gerätes noch Aktivität haben. das ihr zugeordnete Netzelement/Gerät mit dem Zustandswechsel einverstanden ist, andernfalls negativ.

2. Verfahren nach Anspruch 1, **dadurch gekennzeichnet**, das nach einer positiven Bestätigung (20) das Netzelement/Gerät keine Neuaufnahmen von Aktivitäten mehr zuläßt.

3. Verfahren nach Anspruch 1 order 2, **dadurch gekennzeichnet, dass** aus der Aktivitätsübermittlung die Stromsparmodus-Steuereinheit (3) oder die Zentraleinheit (2) detektiert, ob defekte oder sich falsch verhaltende Netzelemente/Geräte vorhanden sind.

4. Verfahren nach einem der Ansprüche1 bis 3, **dadurch gekennzeichnet, dass** bei einer positiven Bestätigung (20) von allen Netzwerkelementen/Geräten im Netz die Zentraleinheit (2) eine Aufforderung (21) sendet, in einen Stromsparmodus zu wechseln.

5. Verfahren nach einem der Ansprüche 1 bis 4, **dadurch gekennzeichnet, dass** die Zentraleinheit (2), insbesondere bei Erhalt der Information, dass der Zustand ein Versorgungsquelle kritisch ist, die Ankündigung (14) derart kennzeichnet, dass ein Zurückweisen der Ankündigung nicht möglich ist, sondern ein Wechsel in den Stromsparmodus zu erfolgen hat.

6. Verfahren nach einem der Ansprüche 3 bis 5, **dadurch gekennzeichnet, dass** bei Ausbleiben einer Bestätigung (20) der Ankündigung oder bei Empfang einer besonders gekennzeichneten Ankündigung ein Wechsel in den Stromsparmodus nach einer vorgegebenen Zeit durch die Zentraleinheit (2) beziehungsweise durch eine lokale Stromsparmodus-Steuereinheit (3) vorgenommen wird.

7. Verfahren nach einem der Ansprüche 1 bis 6, **dadurch gekennzeichnet, dass** eine lokale Stromsparmodus-Steuereinheit (3) grundsätzliche eine positive Bestätigung (20) einer Ankündigung für den Wechsel in den Stromsparmodus gibt, damit die Zentraleinheit (2) überprüfen kann, ob alle Netzelemente/Geräte erreicht wurden und gegebenenfalls eine Ankündigung wiederholen kann.

8. Verfahren nach einem der Ansprüche 1 bis 7, **dadurch gekennzeichnet, dass** die Zentraleinheit (2) auch die Funktion eines "Isochronous Ressource Managers" und/oder eines "Cycle Masters" auf einem Bus entsprechend dem Standard IEEE 1394 übernimmt.

## Claims

1. Method for operation of a communications network in a power saving mode, having the following steps:
- a central control unit (2) is provided for network-wide coordination of the power saving states of network elements, and uses activities and/or states of appliances in a network to decide whether one or more of the network elements and/or the, this or these associated appliance or appliances can be switched to the power saving mode,
- which notifies (14) the network elements/appliances on the basis of this decision of an imminent change to the power saving mode,
- upon receiving a notification (14) by the central control unit (2) in order to change to power saving mode, a local power saving mode control unit (3) checks (15, 16, 17) whether the change can be carried out or whether there are still activities in appliances which would prevent a change to the power saving mode, at least for a predetermined time,
- the local power saving mode control unit (3) acknowledges (20) the notification to change to the power saving mode positively when the network element/appliance which is associated with it agrees with the state change, otherwise it acknowledges it negatively,
**characterized in that**
- in the event of a negative acknowledgement, the network element/appliance additionally transmits in the response those parts within the network element/appliance which are still active.

2. Method according to Claim 1, **characterized in that**, after a positive acknowledgement (20), the network element/appliance does not allow any new activities to start.

3. Method according to Claim 1 or 2, **characterized in that** the power saving mode control unit (3) or the central control unit (2) uses the activity transmission to detect whether there are any defective or incorrectly responding network elements/appliances.

4. Method according to one of Claims 1 to 3,
**characterized in that**, in the event of a positive acknowledgement (20), all of the network elements/appliances in the network send the central control unit (2) a request (21) to change to a power saving mode.

5. Method according to one of Claims 1 to 4,
**characterized in that** the central control unit (2) identifies the notification (14), in particular on receiving the information that the state of a supply source is critical, so that it is impossible to reject the notification but a change must take place to the power saving mode.

6. Method according to one of Claims 3 to 5,
**characterized in that**, in the absence of any acknowledgement (20) of the notification or on reception of a particularly identified notification, a change to the power saving mode is carried out after a predetermined time by the central control unit (2) and/or by a local power saving mode control unit (3).

7. Method according to one of Claims 1 to 6,
**characterized in that** a local power saving mode control unit (3) fundamentally passes a positive acknowledgement (20) of a notification for the change to the power saving mode, in order that the central control unit (2) can check whether all of the network elements/appliances have been reached and whether a notification may possibly be repeated.

8. Method according to one of Claims 1 to 7,
**characterized in that** the central control unit (2) also carries out the function of an "isochronous resource manager" and/or of a "cycle master" on a bus in accordance with IEEE Standard 1394.

## Revendications

1. Procédé pour actionner un réseau de communication dans un mode d'économie d'énergie, comprenant les étapes suivantes :
- pour coordonner dans l'ensemble du réseau des états économiseurs d'énergie d'éléments de réseau, une unité centrale (2) décide sur la base d'activités et/ou états d'appareils dans le réseau si un ou plusieurs éléments de réseau ou un appareil/des appareils associé(s) à celui-ci ou ceux-ci peut/peuvent être placé(s) en mode d'économie d'énergie,
- la commutation en mode d'économie d'énergie à venir suite à cette décision est annoncée (14) aux éléments de réseau/appareils,
- une unité de commande de mode d'économie d'énergie locale (3) vérifie (15, 16, 17) à la réception d'une annonce (14) envoyée par l'unité centrale (2) d'une commutation en mode d'économie d'énergie, si la commutation peut avoir lieu ou s'il y a encore des activités dans des appareils, qui doivent empêcher une commutation en mode d'économie d'énergie, du moins pour une durée prédéterminée,
- l'unité de commande de mode d'économie d'énergie locale (3) confirme (20) l'annonce de commutation en mode d'économie d'énergie positivement lorsque l'élément de réseau/appareil lui étant associé accepte la commutation d'état, dans le cas contraire négativement,
**caractérisé en ce que**
- lors d'une confirmation négative, l'élément de réseau/appareil transmet dans la réponse également quels composants à l'intérieur de l'élément de réseau/appareil sont encore en activité.

2. Procédé selon la revendication 1,
**caractérisé en ce qu'**
après une confirmation positive (20) l'élément de réseau/appareil ne permet plus de reprises d'activités.

3. Procédé selon la revendication 1 ou 2,
**caractérisé en ce qu'**
à partir de la transmission d'activité l'unité de commande de mode d'économie d'énergie (3) ou l'unité centrale (2) détecte la présence d'éléments de réseau/appareils défectueux ou se comportant anormalement.

4. Procédé selon l'une quelconque des revendications 1 à 3,
**caractérisé en ce qu'**
en cas d'une confirmation positive (20) de tous les éléments de réseau/appareils dans le réseau, l'unité centrale (2) envoie une demande (21) de commutation en mode d'économie d'énergie.

5. Procédé selon l'une quelconque des revendications 1 à 4,
**caractérisé en ce que**
l'unité centrale (2), notamment à réception de l'information que l'état d'une source d'alimentation est critique, marque l'annonce (14) de telle sorte qu'un refus de l'annonce n'est pas possible, mais qu'une commutation en mode d'économie d'énergie doit avoir lieu.

6. Procédé selon l'une quelconque des revendications 3 à 5,
**caractérisé en ce qu'**
en absence d'une confirmation (20) de l'annonce ou suite à la réception d'une annonce particulièrement marquée une commutation en mode d'économie d'énergie sera effectuée par l'unité centrale (2) ou par une unité de commande de mode d'économie d'énergie locale (3) au bout d'un temps prédéterminé.

7. Procédé selon l'une quelconque des revendications 1 à 6,
**caractérisé en ce qu'**
une unité de commande de mode d'économie d'énergie (3) donne par principe une confirmation (20) positive à une annonce de commutation en mode d'économie d'énergie, afin que l'unité centrale (2) puisse vérifier si tous les éléments de réseau/appareils ont été atteints et le cas échéant répéter une annonce.

8. Procédé selon l'une quelconque des revendications 1 à 7,
**caractérisé en ce que**
l'unité centrale (2) assure également la fonction d'un « Isochronous Ressource Manager » et/ou d'un « Cycle Master » sur un bus selon le standard IEEE 1394.
